**Europäisches Patentamt**

**European Patent Office**

**Office européen des brevets**

(19)

(11) Veröffentlichungsnummer: **0 170 868**
**B1**

(12) # EUROPÄISCHE PATENTSCHRIFT

(45) Veröffentlichungstag der Patentschrift:
**12.10.88**

(21) Anmeldenummer: **85108052.3**

(22) Anmeldetag: **28.06.85**

(51) Int. Cl.⁴: **E 04 H 5/12,** F 28 C 1/02,
F 28 F 25/12

(54) **Naturzugkühlturm.**

(30) Priorität: **03.07.84 DE 3424468**

(43) Veröffentlichungstag der Anmeldung:
**12.02.86 Patentblatt 86/7**

(45) Bekanntmachung des Hinweises auf die Patenterteilung:
**12.10.88 Patentblatt 88/41**

(84) Benannte Vertragsstaaten:
**BE CH DE FR GB LI NL**

(56) Entgegenhaltungen:
**DE-A-1 601 137**
**DE-A-2 116 451**
**DE-A-2 228 762**
**DE-A-2 842 191**
**DE-B-2 414 172**
**DE-C-351 708**
**DE-C-616 766**
**FR-A-454 810**
**FR-A-2 426 234**
**FR-A-2 449 258**
**FR-A-2 488 314**
**GB-A-7 870**
**GB-A-630 823**

**WÄRME, Band 80, Nr. 3, Juni 1974, Seiten 25-32, München, DE; P. BERLINER: "Gegenwärtige Kühlturmtechnik", Teil 1**

(73) Patentinhaber: **Ernst, Günter, Prof. Dr.- Ing., 57, Strasse des Roten Kreuzes, D-7500 Karlsruhe 41 (DE)**

(72) Erfinder: **Ernst, Günter, Prof. Dr.- Ing., 57, Strasse des Roten Kreuzes, D-7500 Karlsruhe 41 (DE)**

(74) Vertreter: **Liesegang, Roland, Dr.- Ing., FORRESTER & BOEHMERT Widenmayerstrasse 4 Postfach 22 01 37, D-8000 München 22 (DE)**

EP 0 170 868 B1

**Beschreibung**

Die Erfindung betrifft einen Naturzugkühlturm großer Höhe, dessen Mantel sich ausgehend von einem Basisdurchmesser nach oben zu einer Austrittsöffnung hin verjüngt, wobei die Höhe größer als der Austrittsdurchmesser des Mantels ist gemäß den Oberbegriff des Anspruchs 1. Eine übliche Bauform eines Kühlturms dieser Art hat einen Mantel etwa in Form eines Hypberboloids, wobei das Verhältnis zwischen Höhe und Austrittsdurchmesser etwa bei dem Wert 2 liegt (vgl. Dr. Berliner in DE-Z Wärme, Band 80, Heft 3, 1974, S. 25 - 26, Bild 1.1).

Die Höhe der heute üblichen Kühltürme ist also im Vergleich zum Austrittsdurchmesser klein. Ein soeben fertiggestellter Naturzugkühlturm mit einer Leistung von 2500 MW Abwärme hat beispielsweise eine Höhe von etwa 165 m, einen Basisdurchmesser von etwa 145 m und einen Austrittsdurchmesser von etwa 85 m.

Es ist bekannt, zur Vermeidung von Kaltlufteinbrüchen die Krone des Kühlturms zu verjüngen (DE-PS-2 414 172). Wenn sich hierbei auch das Verhältnis zwischen Höhe und Austrittsdurchmesser des Kühlturms vergrößert, bleiben jedoch die Abmessungen, welche die Gesamtform des Kühlturms prägen, nämlich Höhe und durchschnittlicher Durchmesser über die Höhe, mit anderen Worten der "Schlankheitsgrad", unverändert.

Der aus Kühltürmen austretende Schwaden enthält Partikel, die sich in Form von Immissionen in näherer und fernerer Umgebung des Kühlturmes niederschlagen können. Die Maximalwerte dieser Immissionen können insbesondere in der näheren Umgebung (5 km Umkreis) eines Kühlturms herkömmlicher Bauart Anlaß zu Besorgnis sein. Dies gilt insbesondere dann, wenn entschwefelte Rauchgase bei mit fossilen Brennstoffen geheizten Kraftwerken in den Kühlturmschwaden eingemischt werden.

Der Erfindung liegt die Aufgabe zugrunde, einen Naturzugkühlturm der eingangs beschriebenen Art so auszubilden, daß die Immission in näherer und fernerer Umgebung des Kühlturms vermindert werden soll.

Zur Lösung dieser Aufgabe sind gemäß der Erfindung die Merkmale des Anspruchs 1 vorgesehen.

Es ist zwar schon ein bautechnischer Vorschlag zur Konstruktion von Türmen aller Art, darunter auch Kühltürmen gemacht worden, die eine relativ schlanke Form aufweisen. Strömungstechnische oder thermodynamische Gesichtspunkte, wie das Verhältnis von Höhe zu Austrittsdurchmesser sind dort jedoch nicht angesprochen (DE-OS-2 842 191).

Mit der Erfindung wird ein Kühlturm geschaffen, dessen Mantel wesentlich höher ist und einen wesentlich kleineren durchschnittlichen Querschnitt hat, d. h. ein wesentlich schlankerer Kühlturm.

Der Kühlturm nach der Erfindung ist so gestaltet, daß seine Austrittsgeschwindigkeit anstatt bisher zwischen 4 und 6 m/s nun bei 8 bis 15 m/s liegt. Aufgrund dieser wesentlich erhöhten Austrittsgeschwindigkeit des Schwadens in Verbindung mit der größeren Höhe der Austrittsöffnung werden die mit dem Schwaden austretenden Emissionen in größere Höhe gebracht. Der aufgrund des verringerten Austrittsdurchmesser kleinere Strahldurchmesser hat eine geringere Einmischung von Umgebungsluft in den Strahl zur Folge. Dies bewirkt, daß der Auftrieb des Strahles länger erhalten bleibt, so daß der Strahl auch dadurch höher aufsteigt.

Aufgrund der größeren Aufstiegshöhe der Emissionen werden die Maxima der Immissionswerte vermindert. Dies wirkt sich vor allem vorteilhaft in näherer Umgebung (5 - 10 km Umkreis) des Kühlturms bzw. des damit ausgerüsteten Kraftwerks aus.

Es ist ein Kühlturm mit den Merkmale des Oberbegriffs des Anspruchs 1 bekannt, bei den Teile der Einbauten radial ausserhalb des Mantels liegen (FR-A-2 449 258). Diese äusseren Einbauten werden dort im Querstrom durchströmt, was die Kühlwirkung stark einschränkt.

Die Gestaltung nach der Erfindung schafft eine Durchströmung sämtlicher Einbauten, d. h. auch der radial außerhalb des Mantels gelegenen Einbauten, im Gegenstrom. Dies führt zu einer optimalen Kühlwirkung, wobei gleichzeitig insbesondere im unteren Bereich des Kühlturmes erhebliche Einsparungen an Baustoffen für den Mantel verwirklicht sind. Der Kühlturm nach der Erfindung hat also eine hohe Kühlleistung und ist gleichwohl sehr wirtschaftlich herstellbar.

Ein weiterer wesentlicher Vorteil des Naturzugkühlturms nach der Erfindung ist, daß durch den Wind verursachte Wirbelgebiete auf der Leeseite anderer Gebäude von dem hohen Mantel des neuen Kühlturms soweit überragt werden, daß der emittierte Schwaden nicht mehr durch die Leewirbel zum Boden transportiert werden kann. Dadurch wird eine in der Nähe des Kühlturms mögliche Erhöhung der Immissionswerte vermieden. Das Wirbelgebiet auf der Leeseite des schlanken Kühlturms nach der Erfindung ist horizontal weniger ausgedehnt, so daß Schwaden durch die Leewirbel des Mantels in geringerem Maße nach unten transportiert werden.

Bei der neuen Bauform des Naturzugkühlturms nach der Erfindung wird Kaltlufteinbrüchen durch die höhere Strömungsgeschwindigkeit des Schwadens im Austritt entgegengewirkt.

Der für die größere Mantelhöhe erforderliche Mehraufwand an Baustoff wird weitgehend durch die Einsparungen kompensiert, die sich aus der Verminderung des Durchmessers ergeben. Baustatisch ist die Lösung nach der Erfindung wegen der im Horizontalquerschnitt stärkeren Krümmung der Mantelfläche günstiger, so daß insgesamt eine Baustofferofersparnis gegenüber einem Kühlturm gleicher Leistung in herkömmlicher Bauweise zu erwarten ist. Dies steht im Gegensatz zur Auffassung der Fachwelt (s. Aufsatz Dr. Berliner in DE-Z Wärme, Band 80, Heft 3, 1974, S. 25 - 26, Bild 1.4).

Eine Verringerung des Basisdurchmessers und damit eine erhebliche Verminderung des Bauaufwandes wird durch eine höhere Luftgeschwindigkeit in den Einbauten ermöglicht, die andererseits einen höheren Druckverlust in den Einbauten zur Folge hat. Diese Erhöhung des Druckverlustes muß durch eine zusätzliche Erhöhung des Mantels kompensiert werden, die bei einem schlanken Mantel mit geringerem Aufwand als bei einem Mantel konventioneller Dimensionierung realisierbar ist. Außerdem ist bei hoher Luftgeschwindigkeit eine Optimierung und dabei Verringerung der Einbauten ermöglicht. Eine besonders vorteilhafte Bauform des Kühlturms nach der Erfindung zeichnet sich dadurch aus, daß der überwiegende Teil der Einbauten außerhalb des Mantels angeordnet ist.

Bei dem Kühlturm nach der Erfindung sind getrennte Gebäudeteile für die Rieseleinbauten und für die Zugerzeugung vorgesehen. Diese Funktionstrennung ermöglicht, daß nicht die gesamten, wenig intensiv wirkenden und deshalb ausgedehnten Rieseleinbauten mit einer massiven Stahlbetonwand umgeben werden müssen, wie sie für den Mantel des Kühlturmkamins üblicherweise notwendig ist. Vielmehr können die außerhalb des Mantels liegenden Rieseleinbauten durch leichtere Wände umbaut werden. So können Baustoffe in erheblichem Maße eingespart werden.

Bei einem hohen und schlanken Mantel, wie ihn die Erfindung vorsieht, sind im mittleren Bereich der Mantelhöhe eine Verengung und damit weitere bauliche Einsparungen möglich, weil der Diffusorteil einen geringen Öffnungswinkel haben kann und bei hoher Schwadengeschwindigkeit im Kamin thermische Instabilitäten (Kaltlufteinbrüche) kaum auftreten können.

Die mit einem Naturzugkühlturm nach der Erfindung erzielbare Verminderung der Immissionen ist besonders dann wichtig, wenn der Kühlturmschwaden mit eingemischten, entschwefelten Rauchgasen emittiert werden soll.

Hierzu mündet gemäß einer weiteren Ausgestaltung der Erfindung eine Abgasleitung, insbesondere eine Rauchgasleitung, in den Mantel. Dabei ist von Vorteil, wenn diese Abgasleitung sich von unten vertikal in den Mantel erstreckt, die innerhalb des Mantels angeordneten Rieseleinbauten durchsetzt und oberhalb davon, jedoch in der unteren Kühlturmhälfte, mindestens eine Mündung für in den Schwaden austretendes Abgas aufweist. Da die Strömungsgeschwindigkeiten in dem Mantel hoch sind, ist eine gute Vermischung von Teilströmen, hier von entschwefelten Rauchgasen und Kühlturmschwaden, mit geringem zusätzlichen Aufwand, z. B. an Leitflächen, Verwirblern o. dgl. erzielbar. Zusätzlich wird die Vermischung durch die größere Lauflänge im Kamin begünstigt. Das gleiche gilt auch bei Hybrid-Kühltürmen für die Vermischung von trockenem und nassem Schwaden.

Zu diesen Vorteilen kommt hinzu, daß der neue Kühlturm einerseits optisch weniger massiv als ein konventioneller Kühlturm wirken dürfte und andererseits von Luftfahrzeugen aus wegen seiner größeren Breite früher und leichter zu erkennen ist als ein Schornstein gleicher Höhe, wie er üblich zum Ableiten von Rauchgasen benutzt wird.

Bei Teilabschaltung der Kühlturmeinbauten, wie sie bei Hybrid-Kühltürmen, bei Verwendung eines Kühlturmes für mehrere Blöcke und bei Teillastbetrieb wünschenswert ist, ist die Schwadenströmung im Kamin weniger gestört.

Absperrung von Teilbereichen ist leicher möglich, ohne die Kaminströmung durch Asymmetrien zu beeinträchtigen, beispielsweise durch Schließen von erfindungsgemäß vorgesehenen Durchbrüchen in der Kaminwand.

In der Fachwelt wurde eine hohe, schlanke Form eines Kühlturmmantels bisher auch deshalb als nachteilig angesehen, weil man der Auffassung war bzw. noch ist, daß vermeidbare Beschleunigungen von derart großen Luftmassen sowie unnötig große Strömungswiderstände vermieden, d.h. die Austrittsgeschwindigkeit und damit die Austrittsverluste so klein wie möglich gehalten werden müssen (vgl. Aufsatz Dr. Berliner, S. 26, r. Sp. unten). Daß diese Auffassung in der Fachwelt gefestigt ist, zeigt, daß auch heute noch Naturzugkühltürme mit Verhältnissen von Höhe zu Austrittsdurchmesser von etwa 2 gebaut werden (1983 in Betrieb genommener Kühlturm des Blockes B und noch nicht in Betrieb genommener Kühlturm des Blockes C des Kraftwerks Grundremmingen mit jeweils einer Höhe von 160 m und einem Austrittsdurchmesser von 90 m). Die erfinderische Leistung liegt darin, unter Überwindung der genannten Vorurteile eine Form vorzuschlagen, die nach dem ersten Anschein jedenfalls hinsichtlich des zum Ausbringen des Schwadens erforderlichen Energieaufwandes nicht optimal erscheint. Die oben beschriebenen Vorteile wiegen dies aber bei weitem auf.

Die Erfindung ist im folgenden anhand schematischer Zeichnungen von Ausführungsbeispielen mit weiteren Einzelheiten näher erläutert. Es zeigen

Fig. 1 jeweils die Kontur des Mantels eines Naturzugkühlturmes nach der Erfindung durchgezogen bzw. die Kontur eines konventionellen Naturzugkühlturms gestrichelt dargestellt;

Fig. 2 einen Schnitt durch eine besonders vorteilhafte Ausführung eines Naturzugkühlturms nach der Erfindung;

Fig. 3 einen Schnitt wie in Fig. 2 durch eine Abwandlung der Ausführung nach Fig. 2.

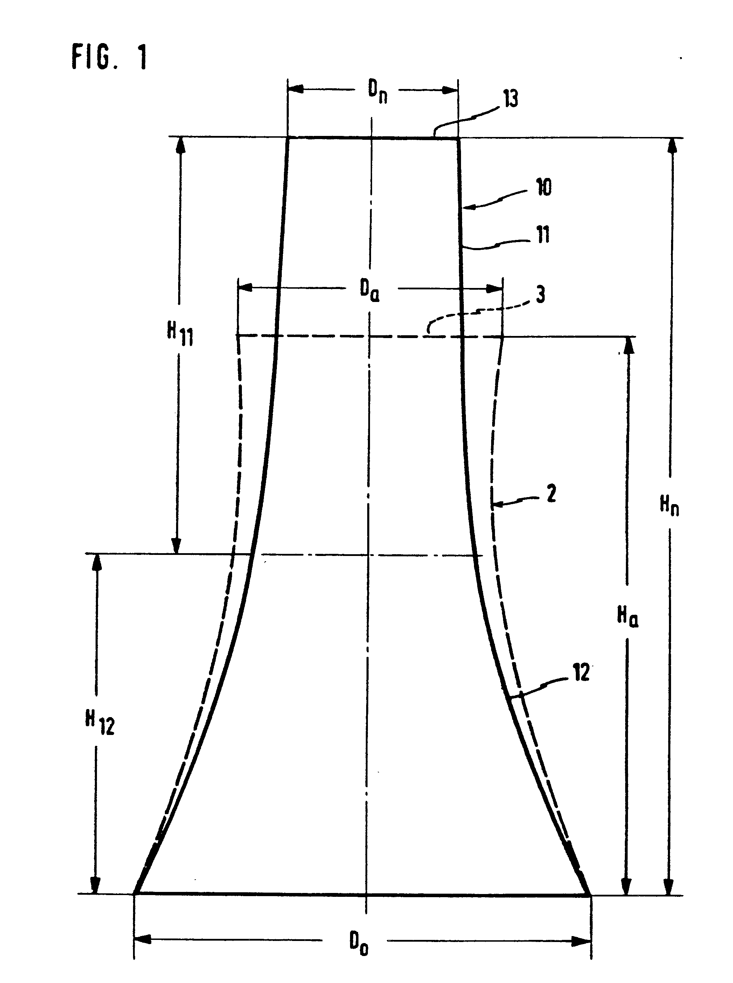

Die in der Figur 1 dargestellten beiden Kühltürme haben einen gemeinsamen Basisdurchmesser $D_0$, der durch die

Kühlturmeinbauten vorgegeben ist. Der Mantel 2 des konventionellen Kühlturms konvergiert zunächst stark und dann nach oben hin immer weniger, um schließlich zur Austrittsöffnung 3 mit dem Durchmesser $D_a$ hin zu divergieren. Das Verhältnis der Gesamthöhe $H_a$ zum Austrittsdurchmesser $D_a$ liegt etwas unter dem Wert 2.

Im Gegensatz dazu konvergiert ausgehend von dem Basisdurchmesser $D_O$ der Mantel 10 des Kühlturms nach der Erfindung in einem unteren Abschnitt 12 der Höhe $H_{12}$ noch stärker als der konventionelle Kühlturm, wobei sich jedoch auch hier die Konvergenz kontinuierlich vermindert, um in einem oberen Abschnitt $H_{11}$ dann zur Austrittsöffnung 13 hin bis auf einen Wert Null abzunehmen. Im oberen Abschnitt 11, dessen Höhe $H_{11}$ etwas mehr als 50 % der Gesamthöhe $H_n$ des neuen Kühlturms ausmacht, vermindert sich der Querschnitt nach oben hin nur noch geringfügig.

Wie für eine Betonkonstruktion vorteilhaft und auch beim konventionellen Kühlturm 2 realisiert, gibt es über die Gesamthöhe keine abrupten Krümmungsänderungen bzw. Knicke. Der Kühlturm nach der Erfindung ist jedoch, wie die Zeichnung zeigt, erheblich schlanker und höher als der konventionelle Kühlturm. Das Verhältnis zwischen der Gesamthöhe $H_n$ und dem Austrittsdurchmesser $D_n$ der Austrittsöffnung 13 liegt etwa bei 4,3.

Bei einer nicht gezeigten Abwandlung ist der obere Abschnitt 11 durch einen völlig zylindrischen Abschnitt ersetzt und beispielsweise in Blechkonstruktion ausgebildet. Dieser obere Abschnitt sitzt auf einem unteren Abschnitt mit sich nach oben vermindernder und am Übergang in dem oberen Abschnitt bei Null liegender Konvergenz.

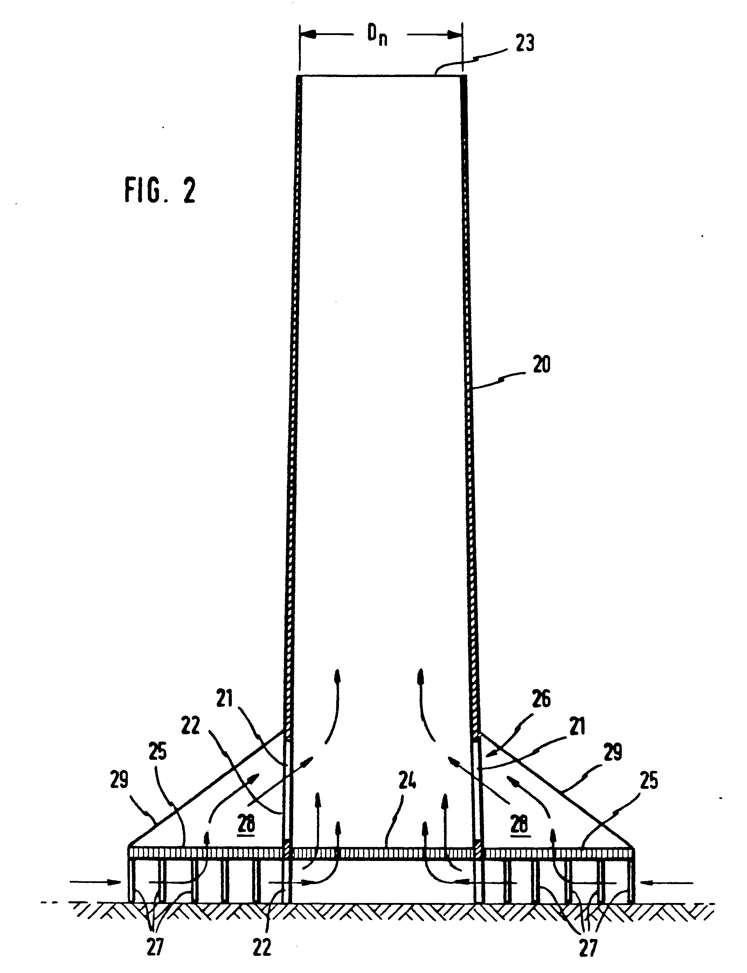

Fig. 2 zeigt eine weitere vorteilhafte Ausführung. Der in Fig. 2 dargestellte Kühlturm hat einen Mantel 20, der über seine ganze Höhe schlank mit leichter Konvergenz zur Austrittsöffnung 23 hin ausgebildet ist. Der kleinere Teil 24 der Kühleinbauten im Fußteil 26 des Mantels 20 ist innen im Mantel angeordnet, während der größere Teil 25 der Einbauten ringförmig um den Fußteil 26 herumgruppiert und auf Stützen 27 abgestützt ist. Der Raum 28 oberhalb der äußeren Einbauten ist durch eine zeltartige, kegelstumpfförmige Überdachung 29 abgedeckt, die über seitliche Durchbrüche 21 im Fußteil 26 des Mantels hinausreicht. Die Durchbrüche können zwischen Stützen 22 ausgebildet sein, auf denen der gesamte Mantel 20 abgestützt ist.

Zwischen den Stützen 27 wird Luft in Pfeilrichtung radial nach innen gesaugt und teils durch die äußeren Einbauten 25 und teils durch die inneren Einbauten 24 nach oben umgelenkt. Sowohl die inneren als auch die äußeren Einbauten werden im Gegenstrom durchströmt. In den Raum 28 oberhalb der äußeren Einbauten 25 strömender Schwaden gelangt über die Durchbrüche 21 in das Mantelinnere und von dort wie üblich zur Austrittsöffnung 23, aus welcher der Schwaden mit hoher Geschwindigkeit (zwischen 8 und 15 m/s) austritt.

Die Ausführung nach Fig. 2 ist baustatisch besonders einfach und ermöglicht eine Einsparung an Baustoffen in großem Ausmaß, weil die bei Fig. 1 erforderliche tragende Erweiterung im unteren Bereich des Mantels entfällt. Bei der Ausführung nach Fig. 2 sind die Funktionen getrennt: Der Mantel 20 ist getrennt von dem Gehäuse zur Aufnahme der Einbauten im Hinblick allein auf die Auftriebserzeugung gestaltet. Dies ermöglicht die Minimierung des Bauaufwandes.

Die Vermischung von trockenem und nassem Schwaden bei Hybridkühltürmen oder von Rauchgasen mit Kühlturmschwaden ist bei geringerem Kamindurchmesser mit Leitvorrichtungen geringeren Ausmaßes möglich. Die Vermischung wird außerdem durch höhere Strömungsgeschwindigkeit und größere Lauflänge der Strömung im höheren Kamin begünstigt.

Selbstverständlich sind auch andere Abwandlungen denkbar. Kennzeichnend für alle Ausführungsformen ist, daß im Vergleich zum konventionellen Kühlturm die Austrittsgeschwindigkeit auf das 2- bis 3-fache der konventionellen Austrittsgeschwindigkeit (4 bis 6 m/s) gesteigert ist.

Ein Naturzugkühlturm der neuen Bauform mit einer Abwärmeleistung von ca. 2500 MW hat beispielsweise einen Mantel mit folgenden Abmessungen:

$$H_n = 225 \text{ m}$$
$$D_n = 50 \text{ bis } 60 \text{ m}$$
$$D_O = 145 \text{ m.}$$

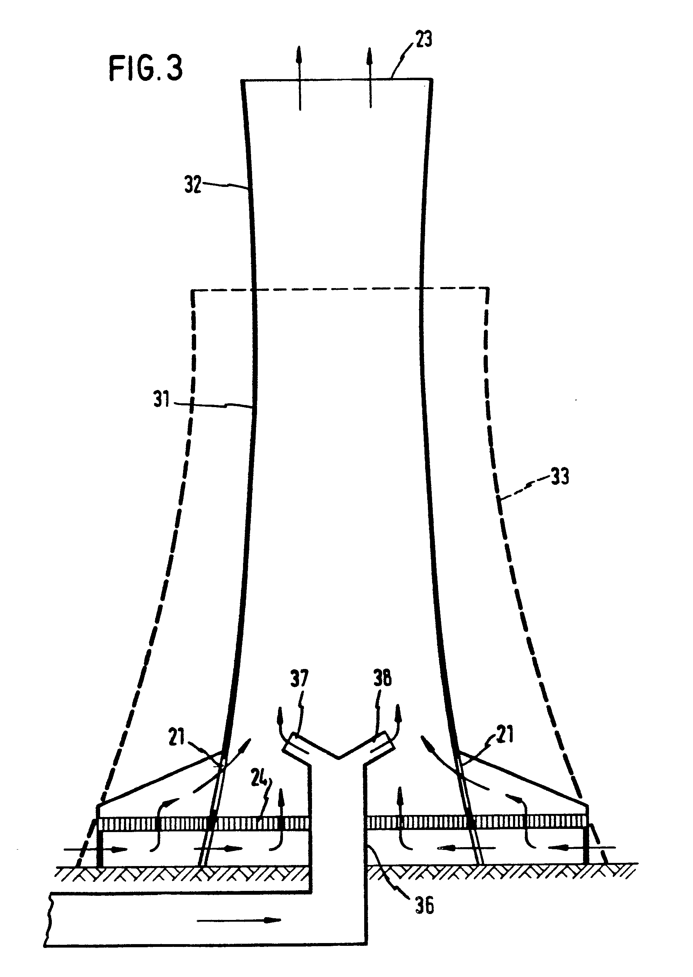

Der Einfachheit halber sind bei der Ausführung nach Fig. 3 gleiche Bezugzeichen für gleiche oder funktionsgleiche Teile verwendet. Solche Teile sind nicht nochmals beschrieben.

Der Naturzugkühlturm nach Fig. 3 unterscheidet sich zunächst äußerlich von demjenigen nach Fig. 2 dadurch, daß der Mantel hier nicht geradlinige sondern vielmehr leicht hyperbolisch gekrümmte Mantellinien aufweist, welche eine Verengung im mittleren Bereich 31 und eine diffusorartige Erweiterung 32 mit ungewöhnlich kleinen Öffnungswinkel zur Austrittsöffnung 23 hin aufweist. Zum Vergleich ist die Mantelkonfiguration eines konventionellen Kühlturmes 33 gestrichelt eingezeichnet. Die diffusorartige Erweiterung 32 verzögert die Schwadenströmung zum Austritt hin und ermöglicht somit einen Rückgewinn an Energie, ohne daß dies der schlanken, baustoffsparenden Form wesentlichen Abbruch tut.

In den Innenraum des Kamins mündet von unten eine Rauchgasleitung 36, die vertikal nach oben die inneren Rieseleinbauten 24 zentral durchsetzt und oberhalb davon und von den Durchbrüchen 21 in Mündungen 37, 38 endet. Über diese vorteilhaft quer oder schräg in den nach oben strömenden Schwaden gerichteten Mündungen 37, 38 wird das entschwefelte Rauchgas in den Schwaden eingemischt.

## Patentansprüche

1. Naturzugkühlturm großer Höhe, dessen Mantel sich ausgehend von einem Basisdurchmesser ($D_0$) nach oben zu einer Austrittsöffnung hin verjüngt, wobei die Höhe ($H_n$) größer als der Austrittsdurchmesser ($D_n$) des Mantels ist, und Einbauten (24, 25) teilweise innerhalb des Mantelfußes (26) angeordnet und teilweise außen um diesen herum gruppiert sind, wobei die inneren Einbauten (24) im Gegenstrom durchströmt werden, dadurch gekennzeichnet, daß der Mantel (20) ein Verhältnis ($H_n/D_n$) von Hohe ($H_n$) zu Austrittsdurchmesser ($D_n$) im Bereich zwischen 3,5 und 7 aufweist, daß der Mantel über die ganze Höhe ($H_n$) schlank ausgebildet ist, daß oberhalb der Einbauten (24, 25) im Mantel seitliche Durchbrüche (21) zur Umgebung um den Umfang des Mantels (20) herum vorgesehen sind und eine Überdachung (29) den Raum (28) oberhalb der äußeren Einbauten (25) bis über die Höhe der Durchbrüche (21) abdeckt und daß auch die äußeren Einbauten (24, 25) im Gegenstrom durchströmt werden.

2. Naturzugkühlturm nach Anspruch 1, dadurch gekennzeichnet, daß der überwiegende Teil der Einbauten (25) außerhalb des Mantels (20) angeordnet ist.

3. Naturzugkühlturm nach Anspruch 1 oder 2, dadurch gekennzeichnet, daß der Mantel (20) im mittleren Bereich seiner Höhe eine Verengung aufweist und zur Austrittsöffnung hin diffusorartig mit kleinem Öffnungswinkel erweitert ist.

4. Naturzugkühlturm nach einem der Ansprüche 1 bis 3, dadurch gekennzeichnet, daß eine Abgasleitung (36) in den Mantel (20) mündet.

5. Naturzugkühlturm nach Anspruch 4, dadurch gekennzeichnet, daß die Abgasleitung (36) sich von unten vertikal in den Mantel erstreckt, die innerhalb des Mantels angeordneten Rieseleinbauten (24) durchsetzt und oberhalb davon, jedoch in der unteren Kühlturmhälfte, mindestens eine Mündung (37, 38) für in den Schwaden austretendes Abgas aufweist.

## Claims

1. A very high natural-draught cooling tower whose jacket narrows upwardly from a base diameter ($D_0$), to an exit opening, the height ($H_n$) being greater than the exit diameter ($D_n$) of the jacket, furniture elements (24, 25) being arranged to some extent in the jacket base (26) and being grouped to some extent around the outside thereof, the inner elements (24) being flowed through in countercurrent, characterised in that the jacket (20) has a ratio ($H_n/D_n$) of height ($H_n$) to exit diameter ($D_n$) of from 3,5 and 7, the jacket is slender over the entire height ($H_n$), lateral perforations giving on to the atmosphere are present in the jacket above the perforations (24, 25) around the periphery of the jacket (20), a roofing (29) covers the space (28) above the outside furniture elements (25) to above the height of the perforations (21), and the outer furniture elements (24, 25) are also flowed through in countercurrent.

2. A tower according to claim 1, characterised in that most of the furniture elements (25) are disposed outside the jacket (20).

3. A tower according to claim 1 or 2, characterised in that the jacket (20) has a narrowing near the centre of its height and widens diffuser-fashion with a small opening angle towards the exit opening.

4. A tower according to any of claims 1 - 3, characterised in that a waste gas line (36) opens into the jacket (20).

5. A tower according to claim 4, characterised in that the waste gas line (36) extends vertically upwards into the jacket, passes through the trickle elements (24) disposed in the jacket and is formed thereabove, but in the bottom half of the tower, with at least one orifice (37, 38) for waste gas issuing into the fumes.

## Revendications

1. Tour de réfrigération à tirage naturel de grande hauteur, dont l'enveloppe diminue de section depuis un diamètre de base ($D_0$) vers le haut jusqu'à une ouverture de sortie, la hauteur ($H_n$) étant supérieure au diamètre de sortie ($D_n$) de l'enveloppe et des chicanes (24, 25) en partie disposées à l'intérieur du pied d'enveloppe (26) et en partie groupées extérieurement autour de celui-ci, les chicanes intérieures (24) étant traversées par un écoulement à contre-courant, caractérisée en ce que l'enveloppe (20) a un rapport ($H_n/D_n$) entre la hauteur ($H_n$) et le diamètre de sortie ($D_n$) qui est compris entre 3,5 et 7, en ce que l'enveloppe a un profil effilé sur toute la hauteur ($H_n$), en ce qu'au-dessus des chicanes (24, 25), il est prévu dans l'enveloppe des passages latéraux (21) vers l'environnement autour de la périphérie de l'enveloppe (20) tandis qu'une couverture supérieure (29) recouvre le volume (28) au-dessus des chicanes extérieures (25) jusqu'au-dessus de la hauteur des passages (21) et en ce qu'également les chicanes extérieures (24, 25) sont traversées par un écoulement à contre-courant.

2. Tour de réfrigération à tirage naturel selon la revendication 1, caractérisée en ce que la majeure partie des chicanes (25) est disposée à l'extérieur de l'enveloppe (20).

3. Tour de réfrigération à tirage naturel selon une des revendications 1 et 2, caractérisée en ce que l'enveloppe (20) comporte un rétrécissement dans une zone médiane de sa hauteur et est élargie avec un petit angle d'ouverture en direction de l'ouverture de sortie, à la façon d'un diffuseur.

4. Tour de réfrigération à tirage naturel selon une des revendications 1 à 3, caractérisée en ce qu'un conduit de gaz effluent (36) débouche dans l'enveloppe (20).

5. Tour de réfrigération à tirage naturel selon la revendication 4, caractérisée en ce que le conduit de gaz effluent (36) s'étend à partir du bas verticalement dans l'enveloppe, il traverse des chicanes à ruissellement (24) disposées à l'intérieur de l'enveloppe et comporte au-dessus de celles-ci, mais cependant dans la moitié inférieure de la tour de réfrigération, au moins une embouchure (37, 38) pour du gaz effluent sortant dans les vapeurs.

FIG. 1

FIG. 2

FIG.3